# EUROPEAN PATENT APPLICATION

(11) **EP 4 807 796 A1**
(43) Date of publication of application: **16.09.2026**
(21) Application number: 26163461.2
(22) Date of filing: 10.03.2026
(51) Int. Cl.: H01M 4/13, H01M 4/66

(54) **ELECTRODE AND RECHARGEABLE BATTERY INCLUDING THE ELECTRODE**

(30) Priority: 13.03.2025 KR 20250032728
(71) Applicant: SAMSUNG SDI CO., LTD., Yongin-si, Gyeonggi-do 17084 (KR)
(72) Inventor: YU, Hong Ryeol, 16678 Suwon-si, Gyeonggi-do (KR); KIM, Min Sic, 16678 Suwon-si, Gyeonggi-do (KR); KWON, Il Kyong, 16678 Suwon-si, Gyeonggi-do (KR); MOON, Jeung Gi, 16678 Suwon-si, Gyeonggi-do (KR)
(74) Representative: Meissner Bolte Partnerschaft mbB

(57) **Abstract**

An electrode includes a current collector and an active material layer formed on at least one surface of the current collector. The active material layer includes first engraved patterns spaced apart from each other and extending in a first direction and a second engraved pattern extending in a second direction intersecting the first direction.

## Description

### BACKGROUND

### 1. Field of the Invention

The present invention relates to a rechargeable battery, and more specifically, to an electrode constituting a rechargeable battery and a rechargeable battery including the electrode.

### 2. Discussion of Related Art

Rechargeable batteries are batteries that can be charged and discharged, unlike primary batteries that cannot be recharged. Low-capacity rechargeable batteries are used in small portable electronic devices such as smartphones, feature phones, notebook computers, digital cameras, and camcorders. High-capacity batteries are widely used as power sources for driving motors in hybrid vehicles, electric vehicles, and the like, power storage batteries, and the like. Such rechargeable batteries include electrodes including a positive electrode and/or a negative electrode, an electrode assembly including the electrodes, a case which accommodates the electrode assembly, electrode terminals connected to the electrode assembly, and the like.

As technology advances, more high-capacity batteries are required. To provide such high-capacity batteries, a plurality of batteries may be used by being electrically connected. In some examples, batteries may be used in electronic devices in the form of a battery module including a plurality of batteries and/or a battery pack including a plurality of battery modules. Depending on the implementation, the battery pack may be formed by a plurality of batteries. Such electronic devices require high output and/or high capacity and include, for example, electric vehicles and the like.

A battery includes an electrode assembly with a separator interposed between a positive electrode and a negative electrode which is accommodated in a sealed case along with an electrolyte. Each of the positive electrode and the negative electrode includes a positive electrode active material layer or a negative electrode active material layer formed on one or both surfaces of a conductive current collector. The electrolyte functions as a medium for ions such as lithium and the like to move between the positive and negative electrodes. To improve the performance and characteristics of the battery, the electrolyte needs to be sufficiently and uniformly impregnated across the entire surface of the electrode assembly, that is, the entire surface of each of the positive electrode, the negative electrode, and the separator.

The above-described information is only intended to improve understanding of the background of the present invention and may include information which does not constitute the related art.

### SUMMARY OF THE INVENTION

The present invention concerns an electrode capable of enhancing the performance and lifespan of a battery by improving the impregnation properties of an electrolyte, and a rechargeable battery including the electrode.

However, technical problems to be solved by the present invention are not limited to the problems described above, and other problems which are not described may be clearly understood by those skilled in the art from the description below.

Specifically, the present invention concerns an electrode including a current collector, and an active material layer on at least one surface of the current collector, wherein the active material layer comprises first engraved patterns spaced apart from each other and extending in a first direction and a second engraved pattern extending in a second direction intersecting the first direction.

According to one embodiment, the second engraved pattern may be provided at an edge of the active material layer in the first direction. Further, the second engraved pattern may be provided at both edges of the active material layer in the first direction. The first engraved patterns may be open to the second engraved patterns at both edges. One or more second engraved patterns may be provided between both edges.

According to one embodiment, each of the first engraved patterns and the second engraved pattern may extend along a line. Each of the first engraved patterns may have a width of 50 to 500 µm, and the second engraved pattern may have a width of 20 to 100 µm. Each of the first engraved patterns may have a depth of 10 to 30 µm, and the second engraved pattern may have a depth of 5 to 30 µm.According to one embodiment, the current collector may be formed of copper, and the electrode may be a negative electrode.

According to one embodiment, the active material layer may comprise a rectangular active material layer, the first engraved patterns may be spaced apart from each other and extending parallel to long sides of the rectangular active material layer, and the second engraved patterns may be formed along facing short side edges of the rectangular active material layer. Furthermore, an electrode is described including a current collector, and a rectangular active material layer on at least one surface of the current collector, wherein engraved patterns are formed in the active material layer, and the engraved patterns include engraved patterns formed along facing short side edges of the rectangular active material layer.

According to one embodiment of the described electrode, the engraved patterns may include first engraved patterns spaced apart from each other and extending parallel to long sides of the rectangular active material layer, and the engraved patterns formed along the facing short side edges are second engraved patterns. Further, the first engraved patterns may be open to the second engraved patterns.

According to one embodiment of the described electrode, each of the first engraved patterns and each of the second engraved patterns may extend along a line. Each of the first engraved patterns may have a width of 50 to 500 µm, and each of the second engraved patterns may have a width of 20 to 100 µm. The each of first engraved patterns may have a depth of 10 to 30 µm, and each of the second engraved patterns may have a depth of 5 to 30 µm.

According to one embodiment of the described electrode, the current collector may be formed of copper, and the electrode may be a negative electrode.

Furthermore, the present invention concerns a rechargeable battery including a case, an electrode assembly accommodated in the case and including a positive electrode, a separator, and a negative electrode in a stack, and an electrolyte impregnated in the electrode assembly, wherein at least one of the positive electrode and the negative electrode includes an electrode according to the invention, specifically a current collector, and an active material layer on at least one surface of the current collector, and the active material layer comprises first engraved patterns spaced apart from each other and extending in a first direction and second engraved patterns extending in a second direction intersecting the first direction.

According to one embodiment, the second engraved patterns may be provided at edges of the active material layer in the first direction and may be open to first engraved patterns. Eeach of the first engraved patterns may have a width of 50 to 500 µm and a depth of 10 to 30 µm, and each of the second engraved patterns may have a width of 20 to 100 µm and a depth of 5 to 30 µm.

According to one embodiment, the current collector may be formed of copper, and the electrode may be a negative electrode.

### BRIEF DESCRIPTION OF THE DRAWINGS

The drawings attached to the present specification illustrate embodiments of the present invention and further describe aspects and features of the present invention along with the detailed description of the present invention. The present invention should not be construed as being limited to the drawings, in which:
FIG. 1 is a view of a cylindrical battery according to an embodiment of the present invention;
FIG. 2 is a cross-sectional view of a prismatic battery according to an embodiment of the present invention;
FIG. 3 is a view of a pouch-type battery according to an embodiment of the present invention;
FIG. 4 is a view of another example of a pouch-type battery according to an embodiment of the present invention;
FIG. 5 is a plan view of an electrode according to an embodiment of the present invention;
FIG. 6 is a cross-sectional view taken along line VI-VI in FIG. 5;
FIG. 7 is a cross-sectional view taken along line VII-VII in FIG. 5;
FIG. 8 is a cross-sectional view taken along line VIII-VIII in FIG. 5;
FIG. 9 is a plan view of an electrode according to another embodiment of the present invention; and
FIG. 10 is a cross-sectional view taken along line X-X in FIG. 9.

### DETAILED DESCRIPTION OF EXEMPLARY EMBODIMENTS

Hereinafter, exemplary embodiments of the present invention will be described in detail with reference to the attached drawings. Terms or words used in this specification and claims should not be interpreted as being limited to ordinary or dictionary meanings and should be interpreted as meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some of the most exemplary embodiments of the invention and do not represent all of the technical ideas of the invention, and that there may be various equivalents and modifications that may replace them at the time of filing.

When used herein, the terms "include or include" and/or "comprising or including" specify the presence of the stated shapes, numbers, steps, operations, members, elements, and/or groups thereof and are not intended to exclude the presence or addition of one or more other shapes, numbers, operations, members, elements, and/or groups thereof.

To help understand the invention, the attached drawings may not be drawn to actual scale, and the dimensions of some components may be exaggerated. In addition, the same reference numbers may be assigned to the same components in different embodiments.

The statement that two objects for comparison are 'equal' means 'substantially the same.' Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary component is disposed "on (or under)" a first component or "above (or below)" the first component, it can mean not only that the arbitrary component is disposed in contact with the top (or bottom) of the first component, but also that a second component can be interposed between the first component and the arbitrary component disposed on (or under) the first component.

In addition, when a component is described as being "on," "connected to," or "coupled to" in another component, the components may be directly connected or coupled to each other, but it should be understood that still another component may be "interposed" between the components, or each component may be "connected," "coupled," or "linked" through still another component.

As used herein, the term "and/or" includes any and all combinations of one or more of the associated listed items. Further, the use of "may" when describing embodiments of the present invention refers to "one or more embodiments of the present invention". Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize".

As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc., may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above". Therefore, the term "below" can encompass both the upward and downward directions.

The terms used in the present specification are intended to describe the embodiments of the present invention and are not intended to limit the present invention.

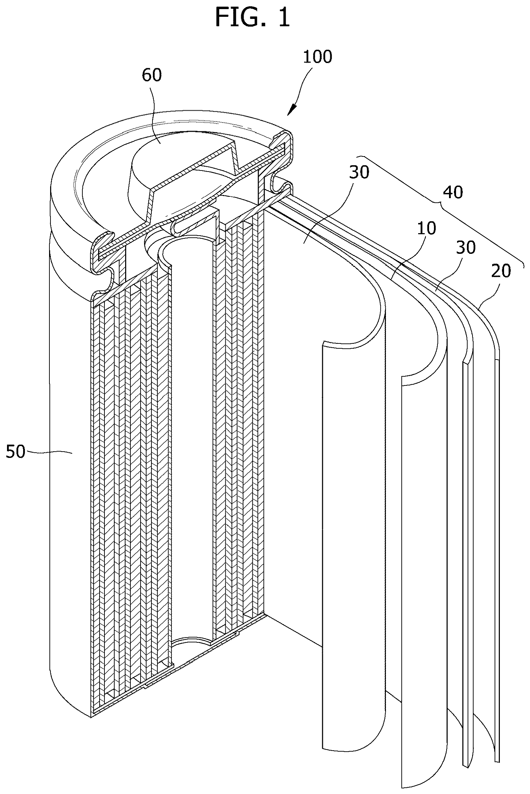

FIGS. 1 to 4 are views schematically illustrating batteries according to embodiments of the present invention.

### Battery 100

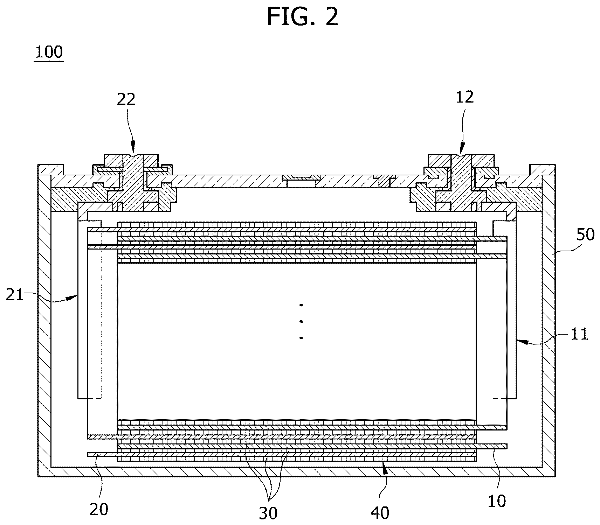

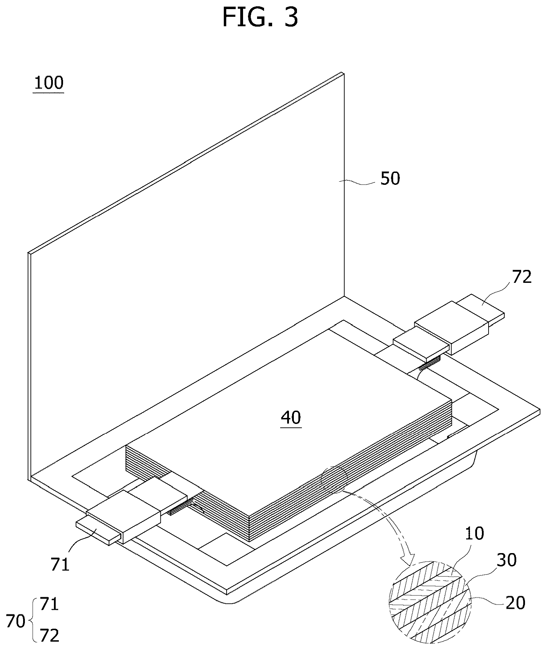

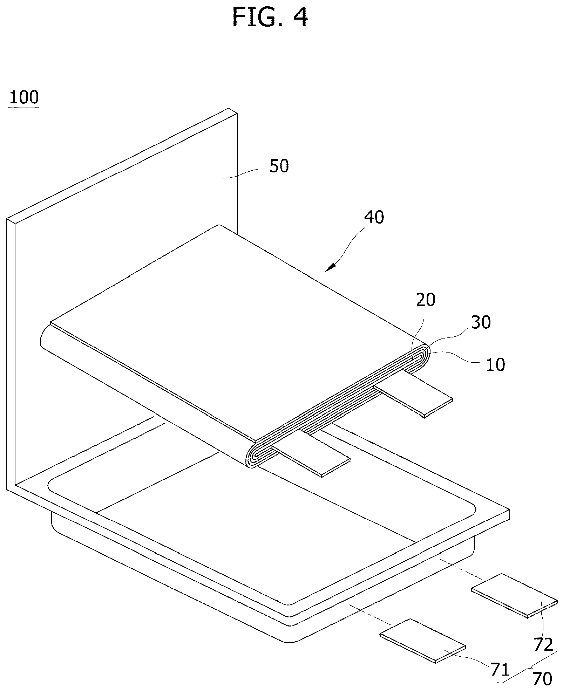

The battery 100 may be cylindrical, prismatic, pouch-shaped, coin-shaped, or the like depending on its shape. FIGS. 1 to 4 are views schematically illustrating batteries, wherein FIG. 1 illustrates a cylindrical battery, FIG. 2 illustrates a prismatic battery, and FIGS. 3 and 4 illustrate a pouch-type battery. Referring to FIGS. 1 to 4, the battery 100 may include an electrode assembly 40 with a separator 30 interposed between a positive electrode 10 and a negative electrode 20, and a case 50 in which the electrode assembly 40 is accommodated. The positive electrode 10, the negative electrode 20, and the separator 30 may be impregnated with an electrolyte (not illustrated). As illustrated in FIG. 1, the battery 100 may include a sealing member 60 which seals the case 50. As illustrated in FIG. 2, the battery 100 may include a positive electrode lead tab 11 and a positive electrode terminal 12, and a negative electrode lead tab 21 and a negative electrode terminal 22. As illustrated in FIGS. 3 and 4, the battery 100 may include electrode tabs 70, that is, a positive electrode tab 71 and a negative electrode tab 72, which form an electrical path for conducting current generated in the electrode assembly 40 to outside of the battery 100.

### Positive electrode 10

The positive electrode 10 may include a current collector (a substrate) and a positive electrode active material layer formed on the current collector. The positive electrode active material layer may include a positive electrode active material and further include a binder and/or a conductive material. Further, the positive electrode may further include an additive that may serve as a sacrificial positive electrode.

The amount of the positive electrode active material may be 90 wt% to 99.5 wt% based on 100 wt% of the positive electrode active material layer, and the amount of each of the binder and the conductive material may be 0.5 wt% to 5 wt% based on 100 wt% of the positive electrode active material layer.

A compound capable of reversibly intercalating and deintercalating lithium (a lithiated intercalation compound) may be used as the positive electrode active material. Specifically, one or more of a composite oxide of lithium and a metal selected from cobalt, manganese, nickel, and combinations thereof may be used.

The composite oxide may be a lithium transition metal composite oxide. Specific examples of the composite oxide include lithium nickel-based oxides, lithium cobalt-based oxides, lithium manganese-based oxides, lithium iron phosphate-based compounds, cobalt-free lithium nickel-manganese-based oxides, or a combination thereof. For example, a compound represented by any one of the chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

The positive electrode active material may be a high nickel-based positive electrode active material with a nickel content of 80 mol% or more, 85 mol% or more, 90 mol% or more, 91 mol% or more, or 94 mol% or more and 99 mol% or less, based on 100 mol% of metals in the lithium transition metal composite oxide excluding lithium. The high nickel-based positive electrode active material may provide high capacity and therefore may be applied to high capacity, high density batteries.

A binder for a dry electrode film may be a dry binder that attaches the positive electrode active material particles to each other and allows the positive electrode active material particles to maintain a film form. The dry binder may be a polymer material which may be fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material which does not cause an undesirable chemical change and is electronically conductive may be used. Examples of the conductive material include a carbon-based material such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

Aluminum may be used as the current collector, but the present invention is not limited thereto.

### Negative electrode 20.

The negative electrode 20 for the battery 100 may include a current collector (a substrate) and a negative electrode active material layer provided on the current collector. The negative electrode active material layer may include a negative electrode active material and further include a binder and/or a conductive material.

For example, the negative electrode active material layer may include the negative electrode active material in an amount of 90% to 99.5% by weight, the binder in an amount of 0.5% to 5% by weight, and the conductive material in an amount of 0% to 5% by weight.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. Examples of the crystalline carbon include graphite such as amorphous, plate-shaped, flaky, spherical, or fibrous natural graphite or artificial graphite, and examples of the amorphous carbon include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or a Sn-based negative electrode active material may be used as the material capable of doping and dedoping lithium. The Si-based negative electrode active material may include silicon, a silicon-carbon composite, SiOₓ (0 < x < 2), an Si-Q alloy, or a combination thereof. In the formula Si-Q, Q is selected from an alkali metal, an alkaline earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include secondary particles (each being a core) in which silicon primary particles are assembled, and amorphous carbon coating layers (each being a shell) provided on the surfaces of the secondary particles. The amorphous carbon may also be located between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

A binder for a dry electrode film may be a dry binder that attaches the negative electrode active material particles to each other and allows the negative electrode active material particles to maintain a film form. The dry binder may be a polymer material which may be fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material which does not cause an undesirable chemical change and is electronically conductive may be used. Specific examples of the conductive material may include a carbon-based material such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

The negative electrode current collector may be selected from copper foil, nickel foil, stainless steel foil, titanium foil, nickel foam, copper foam, a polymer substrate coated with a conductive metal, and a combination thereof.

### Electrolyte

The electrolyte for the battery 100 may include a non-aqueous organic solvent and a lithium salt.

The non-aqueous organic solvent serves as a medium through which ions involved in an electrochemical reaction of the battery may move. The non-aqueous organic solvent may include a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, or the like may be used. Further, as the ketone-based solvent, cyclohexanone or the like may be used. As the alcohol-based solvent, ethyl alcohol, isopropyl alcohol, or the like may be used, and as the aprotic solvent, nitriles such as R-CN (wherein R is a linear, branched, or cyclic hydrocarbon group having 2 to 20 carbon atoms and may include double bonds, an aromatic ring, or an ether group) or the like, amides such as dimethylformamide or the like, dioxolanes such as 1,3-dioxolane, 1,4-dioxolane, or the like, sulfolanes, or the like may be used.

The non-aqueous organic solvent may be used alone or in a mixture of two or more.

Further, when the carbonate-based solvent is used, a mixture of a cyclic carbonate and a chain carbonate may be used, and the cyclic carbonate and the chain carbonate may be mixed in a volume ratio of 1:1 to 1:9.

The lithium salt is dissolved in an organic solvent and serves as a source of lithium ions in the battery to enable the basic operation of a rechargeable battery and promote the movement of lithium ions between the positive electrode and the negative electrode. Examples of the lithium salt may include one or more of LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

### Separator 30

The battery 100 includes the separator 30 interposed between the positive electrode 10 and the negative electrode 20. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

The separator 30 may include a porous substrate and a coating layer containing an organic material, an inorganic material, or a combination thereof located on one or both sides of the porous substrate.

The porous substrate may be a polymer film formed of one polymer selected from polyolefins such as polyethylene and polypropylene, polyesters such as polyethylene terephthalate and polybutylene terephthalate, polyacetal, polyamide, polyimide, polycarbonate, polyetherketone, polyaryletherketone, polyetherimide, polyamideimide, polybenzimidazole, polyether sulfone, polyphenylene oxide, a cyclic olefin copolymer, polyphenylene sulfide, polyethylene naphthalate, TEFLON^{®}, and polytetrafluoroethylene or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer. In other embodiments, a coating layer containing an organic material and a coating layer containing an inorganic material are stacked.

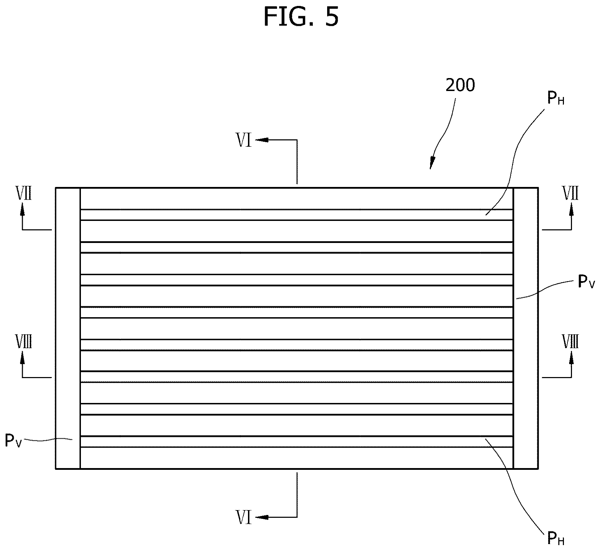

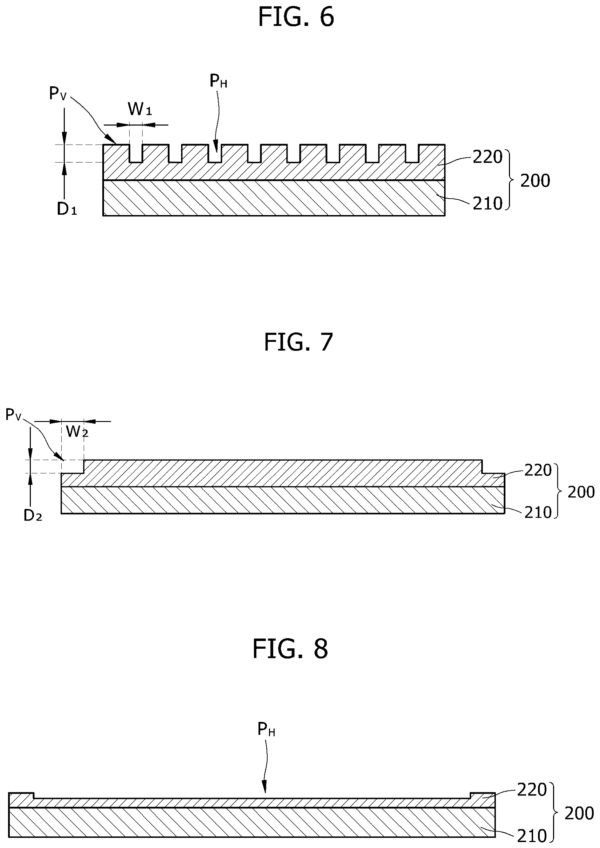

FIG. 5 is a plan view of an electrode according to an embodiment of the present invention. FIG. 6 is a cross-sectional view taken along line VI-VI in FIG. 5, FIG. 7 is a cross-sectional view taken along line VII-VII in FIG. 5, and FIG. 8 is a cross-sectional view taken along line VIII-VIII in FIG. 5. Referring to FIGS. 5 to 8, an electrode 200 includes a current collector 210 and an active material layer 220.

The current collector 210 may be formed of a conductive material, for example, a metal. When the electrode 200 is a positive electrode, the current collector 210 may be formed, for example, of aluminum (Al). When the electrode 200 is a negative electrode, the current collector 210 may be formed, for example, of copper (Cu). However, the material of the electrode 200 is not limited to these examples.

The active material layer 220 may be a layer formed of an electrode active material and having a certain thickness. For example, the active material layer 220 may have a thickness of about 50 to 200 µm. But the present invention is not limited with respect to thickness. As illustrated in FIGS. 5 to 8, the active material layer 220 may be formed on one surface of the current collector 210. However, the active material layer 220 is not limited thereto, and may be formed on both surfaces of the current collector 210.

In a plan view, the active material layer 220 may have a rectangular shape (see FIG. 5). For example, the rectangular active material layer 220 may be longer in a horizontal direction (a first direction) than in a vertical direction (a second direction). However, the active material layer 220 is not limited to such a configuration, and the vertical direction is longer than the horizontal direction, or the horizontal direction and the vertical direction are substantially the same. Further, the rectangular active material layer 220 may be formed to cover the entire surface of the collector 210. In other embodiments, the active material layer 220 may be formed to cover only a portion of the surface of the collector 210.

There are no specific limitations on the type of electrode active material constituting the active material layer 220. When the electrode 200 is a positive electrode, the active material layer 220 may be formed of a mixture (a composite) containing a conductive material, a binder, and the like in addition to the above-described positive electrode active material. When the electrode 200 is a negative electrode, the active material layer 220 may be formed of a mixture (a composite) containing a conductive material, a binder, and the like in addition to the above-described negative electrode active material. The active material layer 220 needs not be a single layer and may be formed as a plurality of layers.

A plurality of first engraved patterns P_{H} extending in the first direction (the horizontal direction in FIG. 5) are formed into the surface of the active material layer 220. There are no specific limitations on a method of forming the first engraved patterns P_{H}. In some examples, the first engraved patterns P_{H} may be formed by etching and removing a portion of the active material layer 220 using a laser.

There are eight first engraved patterns P_{H} in the embodiment depicted in FIG. 5, but this is only exemplary. The number of first engraved patterns P_{H} may vary depending on the length of the active material layer 220, the width of the first engraved patterns P_{H}, the spacing between the first engraved patterns P_{H}, and the like. Further, the first engraved pattern P_{H} is illustrated as having a rectangular cross-section (see FIG. 6), but this is also only exemplary. The first engraved pattern P_{H} may have other cross-sectional shapes such as a V-shape, a U-shape, or the like.

Each of the first engraved patterns P_{H} may have a line shape extending in a direction from the left side to the right side of the active material layer 220. However, the present invention is not limited thereto, the first engraved pattern P_{H} may include a plurality of dots disposed along the first direction, a plurality of relatively short lines (line segments) disposed in a row in the first direction, or a combination of a plurality of lines (line segments) and a plurality of dots disposed parallel to each other in the first direction.

A depth D₁ of the first engraved pattern P_{H} may be about 10 to 30 µm. Further, a width W₁ of the first engraved pattern P_{H} may be about 50 to 500 µm. However, these depths D₁ and widths W₁ of the first engraved pattern P_{H} are exemplary, and may be set with consideration of the effect of performance degradation of the electrode due to the removal of the active material along with the effect of enhanced impregnation properties.

According to an embodiment, the first engraved pattern P_{H} may extend to each of the left and right edges of the active material layer 220. That is, the first engraved pattern P_{H} may extend to an end portion of the active material layer 220 in the horizontal direction (the first direction), or may be disposed in a line or dot shape at an end portion in the horizontal direction. With such a configuration, the electrolyte may easily permeate into the active material layer 220 through an end portion of the first engraved pattern P_{H}.

Further, a second engraved pattern P_{V} extending in the second direction (the vertical direction in FIG. 5) may be formed on the surface of the active material layer 220. The second engraved pattern P_{V} is also illustrated as having a rectangular cross-section (see FIG. 7), but this is also only exemplary. In other embodiments, the second engraved pattern P_{V} may have a cross-sectional shape such as a V-shape, a U-shape, or the like.

The second engraved pattern P_{V} extending in the second direction may intersect the first engraved patterns P_{H} extending in the first direction. That is, the second engraved pattern P_{V} may intersect each of the first engraved patterns P_{H} that are spaced apart from each other. Because the plurality of first engraved patterns P_{H} are connected by the second engraved pattern P_{V}, the electrolyte may more uniformly and quickly permeate into each of the first engraved patterns P_{H}.

The second engraved pattern P_{V} may be formed at an edge of the active material layer 220 in the first direction. That is, the second engraved pattern P_{V} may be formed in the vertical direction at an end portion of the active material layer 220 in the horizontal direction. Accordingly, the second engraved pattern P_{V} may be disposed at the end portion in the horizontal direction of the active material layer 220 in which a plurality of first engraved patterns P_{H} are spaced apart from each other in the horizontal direction, and thus may serve as an opening for the first engraved pattern P_{H}. Accordingly, the electrolyte may more easily permeate into the plurality of first engraved patterns P_{H} and quickly spread throughout the entire active material layer 220.

The second engraved pattern P_{V} may be formed on one or both sides in the vertical direction of the active material layer 220 having a flat rectangular shape. That is, the second engraved pattern P_{V} may be formed on only one of the left and right sides, or the second engraved pattern P_{V} both sides of the active material layer 220 having a flat rectangular shape. In the latter case, the electrolyte may more easily and quickly permeate into the plurality of first engraved patterns P_{H} through a pair of second engraved patterns P_{V} formed along both sides of the electrode.

A depth D₂ of the second engraved pattern P_{V} may be, for example, about 5 to 30 µm. When the depth D₂ of the second engraved pattern P_{V} is less than 5 µm, the electrolyte may not smoothly permeate through the second engraved pattern P_{V}. On the other hand, when the depth D₂ of the second engraved pattern P_{V} is greater than 30 µm, the amount of active material layer 220 is significantly reduced such that charge/discharge performance may be degraded.

A width W₂ of the second engraved pattern P_{V} may be, for example, about 20 to 100 µm. When the width W₂ of the second engraved pattern P_{V} is less than 20 µm, the electrolyte may not smoothly permeate through the second engraved pattern P_{V}. On the other hand, when the width W₂ of the second engraved pattern P_{V} is greater than 100 µm, the amount of active material layer 220 is relatively significantly reduced such that charge/discharge performance may be degraded.

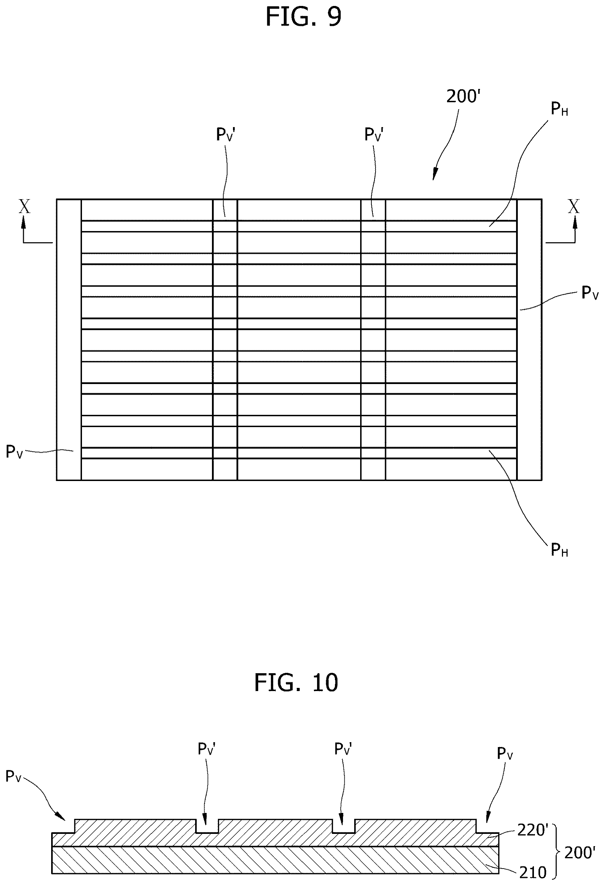

FIG. 9 is a plan view of an electrode according to another embodiment, and FIG. 10 is a cross-sectional view taken along line X-X in FIG. 9. Referring to FIGS. 9 and 10, an electrode 200' includes a current collector 210 and an active material layer 220'.

The electrode 200' illustrated in FIGS. 9 and 10 differs from the electrode 200 described with reference to FIGS. 5 to 8 in that the electrode 200' further includes one or more second engraved patterns P'_{V} extending in the second direction between the second engraved patterns P_{V} formed at both short side edges of the active material layer 220'. Hereinafter, differences from the electrode 200 described with reference to FIGS. 5 to 8 will be described. Items not specifically described may be the same as those described above with reference to FIGS. 5 to 8.

Referring to FIGS. 9 and 10, the second engraved patterns P'_{V} extending in the second direction (the vertical direction in FIG. 9) may be further formed between the second engraved patterns P_{V} formed at the short side edges of a surface of the active material layer 220'. There are two engraved patterns P'_{V} depicted in FIGS. 9 and 10, but this is only exemplary. For example, the number of second engraved patterns P'_{V} may be one or two or more. The second engraved patterns P'_{V} may be spaced at constant intervals, but the present invention is not limited thereto. Further, the second engraved pattern P'_{V} is also illustrated as having a rectangular cross-section (see FIG. 10), but may other cross-sectional shapes such as a V-shape, a U-shape, or the like.

The second engraved patterns P'_{V} may intersect the first engraved patterns P_{H} extending in the first direction. That is, the second engraved pattern P'_{V} may also intersect each of the plurality of first engraved patterns P_{H} spaced apart from each other. Accordingly, since each of the plurality of first engraved patterns P_{H} are connected at more locations by the second engraved patterns P'_{V}, the electrolyte may more uniformly and quickly permeate into each of the plurality of first engraved patterns P_{H}.

Depths or widths of the second engraved pattern P'_{V} may be the same as the depths D₂ or widths W₂ of the second engraved pattern P_{V} illustrated in FIG. 7. However, the present invention is not limited thereto, and the depths or widths of the second engraved pattern P'_{V} may be different from the depths D₂ or widths W₂ of the second engraved pattern P_{V} illustrated in FIG. 7.

According to the present invention, since an electrolyte more uniformly and quickly permeates across the entire surface of an electrode through engraved patterns formed along an edge portion of an active material layer, effects such as a shortened charging time, an increased lifespan, improved impregnation properties, and the like can be achieved.

However, the effects which can be achieved through the present invention are not limited to the above-described effects, and other technical effects which are not mentioned will be clearly understood by those skilled in the art from the description herein.

Although the present invention has been described with reference to embodiments shown in the drawings, these embodiments are merely exemplary, and it should be understood by those skilled in the art that various modifications and equivalents are possible.

## Claims

1. An electrode (200) comprising:
a current collector (210); and
an active material layer (220) on at least one surface of the current collector (210),
wherein the active material layer (220) comprises (i) first engraved patterns (P_{H}) spaced apart from each other and extending in a first direction and (ii) a second engraved pattern (P_{V}) extending in a second direction intersecting the first direction.

2. The electrode (200) according to claim 1, wherein the second engraved pattern (P_{V}) is provided at an edge of the active material layer (220) in the first direction.

3. The electrode (200) according to claim 2, wherein the second engraved pattern (P_{V}) is provided at both edges of the active material layer (220) in the first direction.

4. The electrode (200) according to claim 2 or 3, wherein the first engraved patterns (P_{H}) be open to the second engraved patterns (P_{V}) at the both edges.

5. The electrode (200) according to any of claims 2 to 4, wherein one or more second engraved patterns (P_{V}) are provided between the both edges.

6. The electrode (200) according to any of the preceding claims, wherein each of the first engraved patterns (P_{H}) and the second engraved pattern (P_{V}) extends along a line.

7. The electrode (200) according to any of the preceding claims, wherein each of the first engraved patterns (P_{H}) has a width of 50 to 500 µm, and the second engraved pattern (P_{V}) has a width of 20 to 100 µm.

8. The electrode (200) according to any of the preceding claims, wherein each of the first engraved patterns (P_{H}) has a depth of 10 to 30 µm, and the second engraved pattern (P_{V}) has a depth of 5 to 30 µm.

9. The electrode (200) according to any of the preceding claims, wherein the current collector (210) is formed of copper, and the electrode (200) is a negative electrode (20).

10. The electrode (200) according to any of the preceding claims, wherein
the active material layer (220) comprises a rectangular active material layer,
the first engraved patterns (P_{H}) are spaced apart from each other and extending parallel to long sides of the rectangular active material layer, and
the second engraved patterns (P_{V}) are formed along facing short side edges of the rectangular active material layer.

11. A rechargeable battery (100) comprising:
a case (50);
an electrode assembly (40) accommodated in the case (50), the electrode assembly (40) including a positive electrode (10), a separator (30), and a negative electrode (20) in a stack; and
an electrolyte impregnated in the electrode assembly (40),
wherein at least one of the positive electrode (10) and the negative electrode (20) includes the electrode (200) according to any one of claims 1 to 10.
